# EUROPÄISCHE PATENTSCHRIFT

(11) **EP 1 558 675 B1**
(45) Veröffentlichungstag und Bekanntmachung des Hinweises auf die Patenterteilung: **07.06.2006**
(21) Anmeldenummer: 03772266.7
(22) Anmeldetag: 28.10.2003
(51) Int. Cl.: C08K 5/13, C08K 3/00, C08K 5/51, C08K 5/526

(54) **MISCHUNGEN ENTHALTEND PHENOLISCHE STABILISATOREN UND EIN REDUKTIONSMITTEL**
MIXTURES COMPRISING PHENOLIC STABILISERS AND A REDUCING AGENT
MELANGES CONTENANT DES STABILISATEURS PHENOLIQUES ET UN AGENT DE REDUCTION

(30) Priorität: 30.10.2002 DE 10250768
(43) Veröffentlichungstag der Anmeldung: 03.08.2005
(73) Patentinhaber: BASF Aktiengesellschaft, 67056 Ludwigshafen (DE)
(72) Erfinder: MALZ, Hauke, 49356 Diepholz (DE); FLUG, Thomas, 49419 Wagenfeld (DE); RYBICKI, Sylvia, 49179 Ostercappeln (DE)
(86) Internationale Anmeldenummer: PCT/EP2003/011932
(87) Internationale Veröffentlichungsnummer: WO 2004/039878

(56) Entgegenhaltungen:
- EP-A- 0 289 077
- CH-A- 613 466
- DE-A- 19 806 846
- FR-A- 1 452 520
- GB-A- 893 396
- US-A- 3 554 964

## Beschreibung

Die Erfindung bezieht sich auf Mischungen enthaltend amorphe phenolische Stabilisatoren und mindestens ein Reduktionsmittel, bevorzugt mindestens eine Organophosphorverbindung des trivalenten Phosphors, besonders bevorzugt Phosphit und/oder Phosphonit, sowie auf Verfahren zur Herstellung eines Esters und/oder Amids, insbesondere eines Stabilisators, beispielsweise durch Kondensation, z.B. Veresterung, Umesterung, Umamidierung und/oder Amidierung, bevorzugt mindestens einer phenolischen Carbonsäure und/oder eines phenolischen Carbonsäurederivates, mit mindestens einem Alkohol und/oder Amin. Des weiteren bezieht sich die Erfindung auf Kunststoffe oder Schmieröle enthaltend die erfindungsgemäßen Mischungen.

Kunststoffe, beispielsweise Polyurethane, Polyolefine, Polyacetale, Styrol- und Styrolcopolymere, Polyamide und Polycarbonate werden mit Thermostabilisatoren stabilisiert, um die Abnahme der mechanischen Eigenschaften und die Verfärbung der Produkte aufgrund oxidativer Schädigung zu minimieren. Gängige Antioxidantien, welche in der Technik Verwendung finden, sind z.B. phenolische Stabilisatoren, die unter verschiedenen Markennamen angeboten werden. Auch in der Literatur sind derartige phenolische Stabilisatoren bereits allgemein beschrieben. Beispiele für kommerzielle phenolische Stabilisatoren sind in Plastics Additive Handbook, 5th edition, H. Zweifel, ed, Hanser Publishers, München, 2001 ([1]), Seite 98 bis 107 und Seite 116 bis Seite 121.

Viele der oben genannten Kunststoffe werden in transparenten, transluzenten oder colorierten Anwendungen verwendet. Die Eigenfarbe des Kunststoffes spielt dabei eine entscheidende Rolle. Z.B. kann schon ein zu hoher Gelbgrad des Kunststoffes zu einer Zurückweisung des Produktes durch den Kunden führen.

Aufgrund ihrer Struktur können phenolische Stabilisatoren durch verschiedene chemische Reaktionen in Produkte umgewandelt werden, die chromophoren Charakter haben. Chromophor bedeutet in diesem Zusammenhang, dass die Stoffe Licht im sichtbaren Bereich absorbieren und damit zur Eigenfarbe des Stabilisators beitragen. Um eine Verfärbung des Kunststoffes zu verhindern, werden alle Additive, die eine chromophore Eigenschaften besitzt, vermieden. Auch phenolische Stabilisatoren, die Stoffe mit chromophorem Charakter enthalten, werden aus diesem Grund nicht verwendet.

Derartige Chromophore in phenolischen Stabilisatoren können bereits während der Synthese des Stabilisators entstehen. Insbesondere wenn der Stabilisator nach der Synthese nicht mehr durch z.B. Destillation oder Umkristallisation gereinigt wird oder auf Grund seiner Struktur nicht gereinigt werden kann, können diese bei der Synthese gebildeten Chromophore zu einer deutlichen Einschränkung der Qualität und damit der Nutzbarkeit des Stabilisators werden.

Ziel der vorliegenden Erfindung war es somit, Stabilisatoren zu entwickeln, die über eine möglichst geringe Eigenfarbe verfügen, d.h. bei denen der Anteil an chromophoren Verunreinigungen im Stabilisator auf ein Minimum reduziert wird.

Diese Aufgabe konnte durch die eingangs beschriebenen Stabilisatoren gelöst werden.

Ein weitere Aufgabe der vorliegenden Erfindung bestand darin, Verfahren zur Herstellung der erfindungsgemäßen phenolischen Stabilisatoren, insbesondere Verfahren zur Herstellung eines Esters und/oder Amids, beispielsweise durch Kondensation, z.B. Veresterung, Umesterung, Umamidierung und/oder Amidierung, bevorzugt mindestens einer phenolischen Carbonsäure und/oder eines phenolischen Carbonsäurederivates mit mindestens einem Alkohol und/oder Amin zu entwickeln, die zu phenolischen Estern und/oder phenolischen Amiden, insbesondere den erfindungsgemäßen phenolischen Stabilisatorgemischen führen, die über eine möglichst geringe Eigenfarbe verfügen, d.h. bei denen der Anteil an chromophoren Verunreinigungen im Produkt-, insbesondere Stabilisatorgemisch auf ein Minimum reduziert wird. Die Synthesemethode sollte eine einheitliche Produktqualität, definiert über die Farbzahl ermöglichen.

Diese Aufgabe konnte dadurch gelöst werden, dass man die Veresterung, Umesterung, Umamidierung und/oder Amidierung in Gegenwart von mindestens einem Reduktionsmittel, bevorzugt mindestens einer Organophosphorverbindung des trivalenten Phosphors, besonders bevorzugt Phosphit und/oder Phosphonit durchführt. Aufgrund der Zugabe des Reduktionsmittels zu dem Reaktionsgemisch, mit dem der phenolische Stabilisator hergestellt wird, konnte die Eigenfarbe des Reaktionsproduktes im Vergleich zu phenolischen Stabilisatoren, die in Abwesenheit von Reduktionsmitteln hergestellt wurden, deutlich gesenkt werden. Dabei kann durch die besonders bevorzugten Phosphorverbindungen als Reduktionsmittel nicht nur die Farbe verringert werden, die besonders bevorzugten Phosphorverbindungen können selbst als Stabilisatoren dienen und entsprechend im erfindungsgemäßen Produktgemisch enthaltend die phenolischen Stabilisatoren und die Reduktionsmittel verbleiben. Der Vorteil der geringeren Eigenfarbe der erfindungsgemäßen Mischungen kommt besonders bei amorphen Stabilisatoren zum Tragen, die durch übliche Reinigungsschritte wie z.B. Kristallisation nicht von den Chromophoren gereinigt werden können, da diese erfindungsgemäßen Stabilisatoren nicht kristallisieren. Auch andere, ansonsten übliche Reinigungsverfahren, wie zum Beispiel Destillation kommen bei den phenolischen Stabilisatoren in der Regel nicht in Betracht, da die Molmassen sehr hoch und damit die Dampfdrücke der entsprechenden Verbindungen sehr niedrig sind und gerade bei den notwendigen hohen Temperaturen die Tendenz zur Bildung der Chromophore ansteigt.

Das erfindungsgemäße Herstellverfahren basiert auf der Umsetzung einer phenolischen Wirkstoffgruppe (IA), bevorzugt einer phenolischen Carbonsäure und/oder einem phenolischem Carbonsäurederivat, mit einer Ankergruppe (IB), d.h. einer Verbindung, die über mindestens eine Hydroxylgruppe und/oder mindestens eine Aminogruppe verfügt. Die Verbindung zwischen Wirkstoffgruppe (IA).und Ankergruppe (IB) erfolgt erfindungsgemäß über eine Amid- und/oder eine Estergruppe. Zur Bildung dieser Ester- und/oder Amidgruppe kann die entsprechende Säure direkt, aber auch geeignete Säurederivate wie z.B. Säurehalogenide, insbesondere Säurechloride, Säureanhydride und andere Ester und/oder Amide der Säure, insbesondere solche mit einem flüchtigen Alkohol oder Amin eingesetzt werden. Die Säure oder Säurederivate werden in Gegenwart des Reduktionsmittels bei ansonsten üblichen Bedingungen, bevorzugt bei einem Druck zwischen 1000 mbar und 10 mbar, bei üblicherweise erhöhtem Temperaturen, bevorzugt 70°C bis 300°C, bevorzugt 110°C bis 200°C mit Alkoholen und/oder Aminen der Ankergruppe (IB) zu den gewünschten Estern und/oder Amiden umgesetzt.

Beispielsweise kann der Methylester einer Wirkstoffgruppe (IA), z.B. der Methylester der bevorzugten oder besonders bevorzugten phenolischen Carbonsäuren, insbesondere 3-(3,5-Ditert.-Butyl-4-hydroxyphenyl)-propionsäuremethylester, mit einer Ankergruppe (IB), z.B. einem Alkylalkohol mit einer OH-Gruppe und 7-9 C-Atomen und/oder einem Polyethylenglykol mit einer zahlenmittleren Molmasse von 200 g/mol umgesetzt werden.

Dabei kann die Umsetzung gegebenenfalls in Gegenwart üblicher Katalysatoren durchgeführt werden. Zur Beschleunigung der Reaktion können allgemein bekannte Katalysatoren verwendet werden, z.B. Sulfonsäuren wie Toluolsulfonsäure oder basische Katalysatoren wie Lithiumhydroxid, Lithuimmethylat, Lithiummethylat, Kaliumhydroxid, Kaliummethylat, Kaliumethylat, Kalium-tert.-butylat, Natriumhydroxid, Natriummethylat, Natriumethylat oder/oder Natrium-tert.butylat, bevorzugt aber Kaliummethylat und/oder Kalium tert.butylat. Bevorzugt sind basische Katalysatoren. Es hat sich gezeigt, dass es vorteilhaft ist, den Katalysator nicht auf einmal zur Reaktionsmischung zu geben, sondern nach und nach zuzudosieren, da so die Reaktionszeit verkürzt werden kann. Überraschenderweise hat sich gezeigt, dass bei Verwendung der oben genannten Katalysatoren im Vergleich mit üblichen metallischen Umesterungskatalysatoren wie z.B. Zinnverbindungen wie Dibutylzinndilaurat und/oder Dimethylzinndilaurat, Titanverbindungen wie Titantetrabutylat eine deutlich höhere Reduktion der Produktfarbe erreicht wird. Deshalb werden bevorzugt keine metallischen Katalysatoren eingesetzt.

Wird ein basischer Katalysator zur Umesterung verwendet, so kann beispielsweise derart vorgegangen werden, dass man bevorzugt die Ankergruppe (IB), z.B. ein Polyetherol mit einer zahlenmittleren Molmasse von 200 g/mol typischerweise vorab in einen Reaktor gibt. Bevorzugt danach wird die Wirkstoffgruppe (IA), z.B. 3-(3,5-Ditert.-Butyl-4-hydroxyphenyl)-propionsäuremethylester, in den Reaktor gegeben und die Mischung beispielsweise auf 100°C aufgeheizt. Nach der bevorzugten Inertisierung wird das Reduktionsmittel, bevorzugt Phosphit, zudosiert, zusammen mit dem basischen Katalysator, z.B. Kaliummethylat, der in einer Konzentration von üblicherweise 500 bis 5000 ppm, besonders bevorzugt 1000 bis 2000 ppm bezogen auf die Gesamtmenge des Ansatzes eingesetzt wird. Danach wird die Reaktionstemperatur bevorzugt auf 120°C bis 200°C, besonders bevorzugt 130 bis 170°C, insbesondere 140 bis 150°C angehoben und das entstehende Methanol abdestilliert. Gegebenenfalls kann zur Umsatzerhöhung während der Reaktion noch Kaliummethylat nachdosiert werden.

Nach Abschluss der Reaktion kann der Kaliumkatalysator dann nach allgemein bekannten Verfahren zur Abtrennung von Kaliumkatalysatoren aus Polyetherolen vom erfindungsgemäßen Stabilisator abgetrennt werden. Z.B. kann dies erfolgen durch Verwendung von Ionentauschern oder durch Verwendung von Phosphorsäure oder Salzsäure, bevorzugt aber Phosphorsäure.

Hierzu können beispielsweise 85 % der stöchiometrischen Menge Phosphorsäure, stöchiometrisch bezieht sich hierbei auf die Menge des eingesetzten Kaliummethylats und kann daher variieren, zur Reaktionsmischung zudosiert und 30 min gerührt. Nach erfolgter Filtration des Phosphates kann der Stabilisator aufgrund seiner geringen Eigenfarbe ohne weitere aufwändige Reinigungsverfahren verwendet werden. Unter Umständen kann es gewünscht sein, das Reduktionsmittel wieder zu entfernen. Dies kann z.B. durch Destillation durchgeführt werden, wenn das Reduktionsmittel so gewählt wird, dass seine Molmasse deutlich niedriger als die des phenolischen Stabilisators ist.

Als Wirkstoffgruppe (IA) können allgemein bekannte Carbonsäuren und/oder Carbonsäurederivate, wie z.B. Säurehalogenide, beispielsweise Säurechloride, Säureanhydride, Ester und/oder Amide eingesetzt werden, die eine phenolische Gruppe aufweisen. Bevorzugt werden die folgenden phenolischen Carbonsäuren oder Derivate dieser Carbonsäure, wie z.B. Säurehalogenid, bevorzugt Säurechlorid, Säureanhydrid, Amid und/oder Ester, einsetzt: 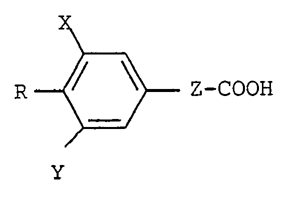 mit der folgenden Bedeutung für R, X, Y und Z:
R: -OH,
X, Y: unabhängig voneinander Wasserstoff, geradkettige, verzweigtkettige und/oder cyclische Alkylgruppe mit 1 bis 12 Kohlenstoffatomen, bevorzugt -C(CH₃)₃
Z: Linearer oder verzweigter Alkylenrest mit 1 bis 12 Kohlenstoffatomen, bevorzugt -CH₂-CH₂-.

Bevorzugt wird somit als Wirkstoffgruppe (IA) die folgende Carbonsäure oder eine entsprechendes, bereits dargestelltes Derivat dieser Carbonsäure eingesetzt: 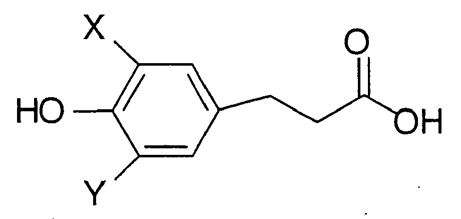 mit der folgenden Bedeutung für X, Y:
X, Y: unabhängig voneinander Wasserstoff, geradkettige, verzweigtkettige und/oder cyclische Alkylgruppe mit 1 bis 12 Kohlenstoffatomen, bevorzugt -C(CH₃)₃.

Besonders bevorzugt wird als Wirkstoffgruppe (IA) die folgende Carbonsäure oder eine entsprechendes, bereits dargestelltes Derivat dieser Carbonsäure eingesetzt:

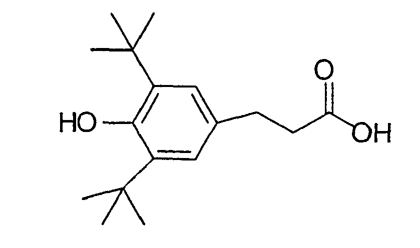

Die Synthese der phenolischen Wirkstoffgruppen (IA) ist allgemein bekannt und Vorschriften beispielsweise zur Synthese von 3-(3,5-Ditert.-Butyl-4-hydroxyphenyl)-propionsäuremethylester finden sich in US 3644482 Seite 4 Zeile 28 ff. Im Folgenden wird ein beispielhaftes Verfahren dargestellt: Zur Herstellung von 3-(3,5-Ditert.-Butyl-4-hydroxyphenyl)-propionsäuremethylester kann z.B. 2,6-Di-tert.-butylphenol und 0,1 bis 10 mol-% bezogen auf 2,6-Di-tert.butylphenol, eines basische Katalysatoren wie z.B. Lithiumhydroxid, Lithuimmethylat, Lithiummethylat, Kaliumhydroxid,Kaliummethylat, Kaliumethylat, Kalium-tert.-butylat, Natriumhydroxid Natriummethylat, Natriumethylat oder/oder Natrium-tert.butylat, bevorzugt aber Kaliummethylat oder Kalium tert.butylat in einen Reaktor gegeben werden. Nach Abdestillieren der korrespondierenden Säure z.B. Methanol, wenn Kaliummethylat eingesetzt wird oder Wasser, wenn Kaliumhydroxid verwendet wird, durch Erhitzen auf z.B. 120 bis 200°C, bevorzugt aber 130 bis 160°C unter Verwendung eines Stickstofftreibstroms und/oder Vakuum kann die reaktive Mischung anschließend auf 90 bis 160°C, bevorzugt auf 100 bis 130°C temperiert und Methylacrylat langsam zudosiert werden. Bevorzugt wird diese Zudosierung unter einem Druck durchgeführt, der größer ist als der Dampfdruck des Methylacrylats bei der gegebenen Reaktionstemperatur. So wird gewährleistet, dass das Methylacrylat nicht aus der Reaktionslösung durch Verdampfen entfernt wird. Wird drucklos gearbeitet, so wird das verdampfte Methylacrylat bevorzugt im Rückfluss wieder in die Reaktionslösung zurückgeleitet. Bevorzugt werden 90 bis 120 mol-% Methylacrylat, bezogen auf 2,6-Di-tert.butylphenol zum 2,6-Di-tert.butylphenol zudosiert, insbesondere aber 95 bis 110 mol-%. Nach 60 bis 180 min Reaktionszeit wird die Reaktion üblicherweise beendet. Das Reaktionsprodukt kann dann durch Neutralisation des alkalischen Katalysators und anschließende Umkristallisation bzw.

Rektifikation auf allgemein bekannte Weise gereinigt werden. Soll bei der anschließenden Herstellung des erfindungsgemäßen phenolischen Stabilisators ein basischer Katalysator Verwendung finden, so kann bevorzugt Methylacrylat aus dem Reaktionsprodukt entfernt werden, bevorzugt z.B. bei 50 bis 80°C, insbesondere 60°C, bevorzugt unter Vakuum und/oder Verwendung eines Stickstofftreibstroms, und anschließend die Ankergruppe (IB) zu der Mischung enthaltend die phenolische Wirkstoffgruppe (IA) zugegeben werden. Nach Inertisierung und Zudosierung des Reduktionsmittels kann die Umesterungsreaktion dann wie bereits beschrieben fortgeführt werden. Der Vorteil dieser Fahrweise, die in einem Reaktor durchgeführt werden kann, liegt in der effizienten Nutzung des Reaktors und des Einsparens des Reinigungsschrittes.

Wird der Stabilisator aus einem sterisch gehinderten Phenol durch chemische Reaktion, z.B. Umesterung oder Umamidierung mit einem Alkohol oder Amin hergestellt, so kann sterisch gehindertes Phenol in situ hergestellt werden. Alternativ kann es in einer ersten Reaktionsstufe hergestellt, isoliert und anschließend mit dem Alkohol oder Amin umgesetzt werden. In beiden Fällen kann es aber sein, dass schon bei der Herstellung des sterisch gehinderten Phenols Verunreinigungen entstehen, die bei der weiteren Umsetzung des sterisch gehinderten Phenols zum endgültigen Stabilisator zu Chromoporen führt. Die Konzentration dieser Chromophore kann dabei in einem breiten Bereich schwanken. Dies führt dazu, dass die einzelnen Stabilisatorchargen unterschiedliche Farbzahlen haben und dementsprechend keine einheitliche Qualität geliefert werden kann. Durch die erfindungsgemäße Verwendung des Reduktionsmittels kann auch bei unterschiedlicher Chromophorenkonzentration einen einheitliche Produktfarbe erreicht werden.

Die Ankergruppe (IB) dient unter anderem zur Einstellung des Molekulargewichts des Stabilisators, sowohl über das Molekulargewicht der Ankergruppe selbst als auch über die Anzahl der Hydroxyl- und/oder Aminogruppe, an die Wirkstoffgruppen (IA) gebunden werden können. Bevorzugt weist die Ankergruppe (IB) 1 bis 20 Hydroxylgruppen und/oder 0 bis 20 Aminogruppen auf. Besonders bevorzugt weist die Ankergruppe (IB) 1 bis 6, insbesondere 1 bis 4 Hydroxylgruppen auf. Bei der Ankergruppe handelt es sich um Verbindungen, die aufgrund ihrer Hydroxyl- und/oder Aminogruppen in der Lage sind, mit der Carboxylfunktion der phenolischen Wirkgruppe (IA) über eine Ester- oder Amid-Gruppe verbunden zu werden. Bevorzugt handelt es sich bei der oder den Hydroxylgruppe(n) der Ankergruppe (IB) um primäre Hydroh-ylgruppe(n), sofern Hydroxylgruppen und nicht ausschließlich Aminogruppen vorhanden sind. Beispielsweise können lineare, verzweigte oder cyclische Alkylgruppen mit 1 bis 30 C-Atomen und 1 bis 20 OH-Gruppen, bevorzugt 1 bis 6 OH-Gruppen, insbesondere 1 bis 4 OH-Gruppen beispielsweise, Methanol, Heptanol, Oktanol, Nonanol, Dodekanol, 3-Methylbutanol, 3-Ethylhexanol, Ethandiol, Hexandiol, Oktandiol, Dodekandiol, Neopentylglykol, Hexamethylendiamin und Pentaerithrit als Ankerguppen verwendet werden. Weiter können als Ankergruppen Ether verwendet werden, z.B. Diethylenglykol, Triethylenglykol, Dipropylenglykol, Tripropylenglykol, Polyalkylenglykol und/oder Polytetrahydrofuran mit einem zahlenmittleren Molekulargewicht von 120 bis 3000 g/mol, z.B. einem Polyethylenglykol mit einem zahlenmittleren Molekulargewicht von 200 g/mol oder ein Polytetrahydrofuran mit einem mittleren zahlenmittleren Molekulargewicht von 250 g/mol. Es können auch Gemische verschiedener Ankergruppen (IB) Verwendung finden.

Auch andere, allgemein für die Umsetzung mit phenolischen Wirkgruppen zur Herstellung phenolischer Stabilisatoren bekannte Ankergruppen können zum Einsatz kommen. Bevorzugt setzt man als Ankergruppe (IB), d.h. als Alkohol, mindestens einen Polyetheralkohol, besonders bevorzugt Polyalkylenetherdiol, insbesondere Polyethylenglykol und/oder Polytetrahydrofuran, bevorzugt mit einem Molekulargewicht von 120 g/mol bis 3000 g/mol, besonders bevorzugt 120 g/mol bis 600 g/mol ein. Weiterhin werden bevorzugt monofunktionelle lineare oder verzweigte Alkylalkohole mit 7 bis 18 Kohlenstoffatomen eingesetzt, insbesondere eine Mischung bestehend aus monofunktionellen Alkylalkoholen mit 7 bis 9 Kohlenstoffatomen, wobei die Mischung pro Alkylalkohol im Durchschnitt 8 Kohlenstoffatome aufweist. Weiterhin wird bevorzugt ein linearer Alkylalkohol mit 18 Kohlenstoffatomen eingesetzt. Ebenfalls bevorzugt werden monofunktionelle lineare oder verzweigte Alkylalkohole mit 13 bis 15 Kohlenstoffatomen eingesetzt.

Als Reduktionsmittel können allgemein bekannte Reduktionsmittel eingesetzt werden, bevorzugt Phosphorverbindungen und/oder Natriumdithionit, besonders bevorzugt Organophosphorverbindungen des trivalenten Phosphors, insbesondere Phosphite und Phosphonite. Beispiele für geeignete Phosphorverbindungen sind z.B. Triphenyl phosphit, Diphenylalkylphosphit, Phenyldialkylphosphit, Tris-(nonylphenyl) phosphit, Trilaurylphosphit, Trioctadecylphosphit, Di-stearyl-pentaerythritol diphosphit, Tris-(2,4-di-tert-butylphenyl) phosphit, Di-isodecylpentaerythritol-diphosphit, Di-(2,4-di-tert-butylphenyl)pentaerythritol diphosphit, Tristearyl-sorbitol triphosphit, Tetrakis-(2,4-di-tert-butylphenyl), 4,4'-diphenylylenediphosphonit, 4,4'-Isopropylidenediphenol-alkyl (C12-15) phosphit (CAS No: 96152-48-6), Poly-(di-5 propylenglykol)-phenylphosphit, Tetraphenyl dipropylenglykol phosphit, Tetraphenyl-diisopropylenglykol-phosphit, Trisisodecylphosphit, Diisodecylphenylphosphit, Diphenylisodecylphosphit oder Gemische daraus.

Weitere Beispiele für Phosphorverbindungen sind zu finden in Plastics Additive Handbook, 5th edition, H. Zweifel, ed, Hanser Publishers, München, 2001 ([1]), S.109-112. Bevorzugt eingesetzt wird Tris-(nonylphenyl)phosphit, 4,4'-Isopropylidenediphenol-alkyl (C12-15) phosphit (CAS No: 96152-48-6), Poly (dipropylenglykol)-phenylphosphit und/oder Tetraphenyl-dipropylenglykolphosphit. Besonders bevorzugt sind Poly(dipropylenglykol)-phenyl-phosphit, 4,4'-Isopropylidenediphenol alkyl (C12-15) phosphit (Weston 439®) (CAS No: 96152-48-6), Tetraphenyl-dipropylenglykolphosphit, Triisooctylphosphit, Tris(-4-n-nonylphenyl)-phosphit, insbesondere Poly-(dipropylenglykol)-phenylphosphit und/oder 4,4'-Isopropylidenediphenol-alkyl (C12-15) phosphit (CAS No: 96152-48-6). Es können auch Mischungen von Phosphiten eingesetzt werden.

Der Gehalt an Reduktionsmittel in der Reaktionsmischung zur Herstellung des phenolischen Stabilisators beträgt bevorzugt 0,01 bis 10 Gew.-% bezogen auf die Gesamtmasse der Mischung, besonders bevorzugt 0,1 bis 5 Gew.-%, insbesondere 0,1 bis 1 Gew.-%.

Die nach diesem erfindungsgemäßen Verfahren hergestellten phenolischen Ester und/oder Amide liegen im Verfahrensprodukt als Gemisch mit dem oder den Reduktionsmittel(n) vor. Dieses Gemisch weist insbesondere den Vorteil auf, dass seine Farbe besonders hell ist. Das in dem Gemisch vorhandene Reduktionsmittel, insbesondere die Phosphite wirken sich bei einer Anwendung zur Stabilisierung von organischen Verbindungen, beispielsweise Kunststoffen oder Schmierölen, nicht nachteilig aus, da auch die Phosphite stabilisierend wirken.

Die erfindungsgemäßen Mischungen, die somit direkt als Stabilisatorgemisch eingesetzt werden können, weisen bevorzugt eine Jod-farbzahl von < 5, besonders bevorzugt 0 bis 5, insbesondere 0 bis 3, insbesondere bevorzugt von 0 bis 1 gemessen jeweils nach DIN 6162. Ist die Jodzahl < 1 empfiehlt sich eine Definition der Farbe nach Hazen (DIN 53409). Die besonders bevorzugen Stabilisatoren weisen demnach eine Hazenzahl < 100, bevorzugt von 0 bis 100, besonders bevorzugt eine Hazenzahl von < 70, insbesondere eine Hazenzahl von 0 bis 70, insbesondere bevorzugt von ≤ 50 auf. Eine solche geringe Farbigkeit ist mit gängigen Verfahren nicht zu erreichen und auf den Einsatz des Reduktionsmittels in der Mischung zurückzuführen.

Die erfindungsgemäßen Mischung sowie die bevorzugten Ausführungsformen der Mischungen ergeben sich aus den bereits eingangs dargestellten bevorzugten Einsatzstoffen.

Bevorzugt sind demnach Mischungen, bei denen der phenolische Stabilisator die folgende Struktureinheit aufweist: 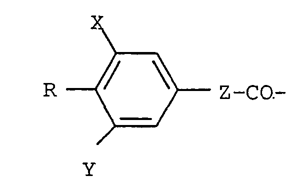 mit der folgenden Bedeutung für R, X, Y und Z:
R: -OH,
X, Y: unabhängig voneinander Wasserstoff, geradkettige, verzweigtkettige und/oder cyclische Alkylgruppe mit 1 bis 12, bevorzugt 3 bis 5 Kohlenstoffatomen, besonders bevorzugt -C(CH₃)₃
Z: Alkylenrest mit 1 bis 12 Kohlenstoffatomen, bevorzugt -CH₂-CH₂-.

Bevorzugt sind ebenfalls Mischungen, bei denen der phenolische Stabilisator mindestens eine phenolische Wirkstoffgruppe (IA) und mindestens eine Ankergruppe (IB) aufweist, wobei (IA) und (IB) über eine Ester- und/oder Amidgruppe verbunden sind und als (IB) mindestens ein Polyether, bevorzugt Polyethylenglykol und/oder Polytetrahydrofuran, mit einem Molekulargewicht von 120 g/mol bis 3000 g/mol vorliegt.

Besonders bevorzugt sind Mischungen enthaltend den folgenden phenolischen Stabilisator: 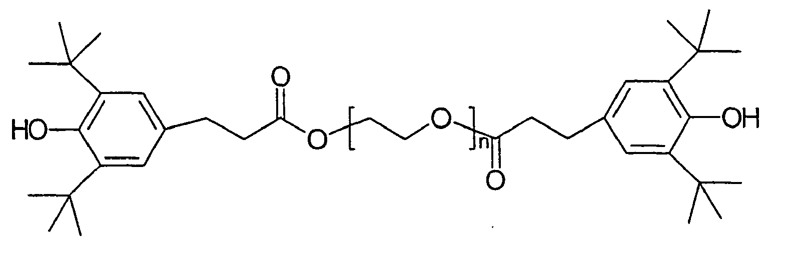 wobei n 1, 2, 3, 4, 5, 6, 7, 8, 9 oder 10 bedeutet, bevorzugt 2, 3, 4, 5, oder 6, besondere bevorzugt 3 oder 4. Insbesondere wird die n derart gewählt, dass das zahlenmittlere Molekulargewicht des Stabilisators zwischen 700 g/mol und 800 g/mol liegt. Besonders bevorzugt wird n derart gewählt, dass in dem Kollektiv, d.h. der Stabilisatormischung enthaltend die einzelnen Stabilisatormoleküle, das gewichtsmittlere Molekulargewicht der Stabilisatormischung größer ist als das zahlenmittlere Molekulargewicht der Stabilisatormischung.

Besonders bevorzugt sind des weiteren Mischungen enthaltend den folgenden phenolischen Stabilisator: 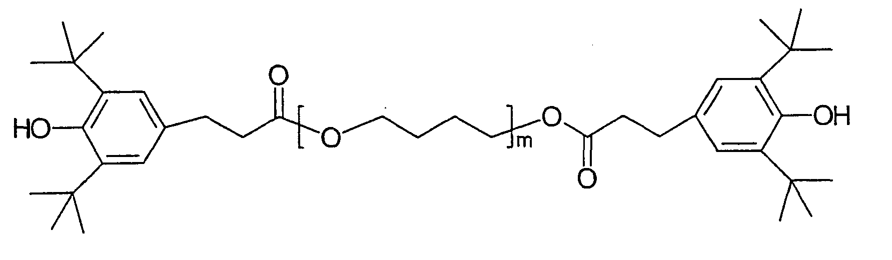 wobei m 1, 2, 3, 4, 5, 6, 7, 8, 9 oder 10 bedeutet, bevorzugt 2, 3, 4, 5, oder 6, besondere bevorzugt 3 oder 4. Insbesondere wird die m derart gewählt, dass das zahlenmittlere Molekulargewicht des Stabilisators zwischen 700 g/mol und 900 g/mol liegt. Besonders bevorzugt wird m derart gewählt, dass in dem Kollektiv, d.h. der Stabilisatormischung enthaltend die einzelnen Stabilisatormoleküle, das gewichtsmittlere Molekulargewicht der Stabilisatormischung größer ist als das zahlenmittlere Molekulargewicht der Stabilisatormischung.

Besonders bevorzugt sind außerdem Mischungen enthaltend den folgenden phenolischen Stabilisator: 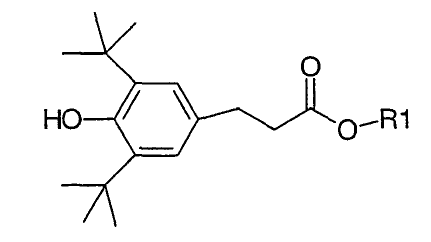 wobei R1 ein Octadecylrest oder ein linearer oder verzweigter Alkylrest mit 7 bis 15, bevorzugt 13 bis 15 oder 7 bis 9 Kohlenstoffatomen ist.

In der erfindungsgemäßen Mischung beträgt das Gewichtsverhältnis von phenolischem Stabilisator zu Reduktionsmittel bevorzugt 10000 : 1 bis 10 : 1, besonders bevorzugt 1000 : 1 bis 20 : 1, insbesondere 1000 : 1 bis 100 : 1.

Die erfindungsgemäßen phenolischen Ester und/oder Amide im Gemisch mit den Reduktionsmitteln, insbesondere mit den Phosphiten, sind nützlich als Stabilisatoren von organischen Materialien, die üblicherweise der oxydativen Zersetzung unterliegen. Solche Materialien schließen ein: synthetische organische polymere Verbindungen, wie Vinylharze, die bei der Polymerisation von Vinylhalogeniden mit ungesättigten polymerisierbaren Verbindungen, beispielsweise Vinylestern, α,β-ungesättigten Aldehyden und ungesättigten Kohlenwasserstoffen, wie Butadien und Styrol, gebildet werden; Poly-α-olefine, wie Polyethylen, Polypropylen, Polyoxymethylen, Polybutylen, Polyisopren und ähnliche einschließlich der Mischpolymerisate von Poly-α-olefinen; Polyurethane, wie solche, die man aus Polyolen und organischen Polyisocyanaten herstellt; Polyamide, wie Polyhexamethylenadipinsäureamid und Polycaprolactam; Polyester, wie Polymethylenterephtalate; Polycarbonate; Polyacetale; Polystyrol; Polyethylenoxid und Mischpolymerisate, wie solche aus hochschlagfestem Polystyrol, das Mischpolymerisate von Butadien und Styrol enthält, und Mischpolymerisate, die durch Mischpolymerisation von Acetylnitril, Butadien und/oder Styrol gebildet werden. Andere Materialien, die mit den erfindungsgemäßen Verbindungen stabilisiert werden können, schließen ein: Schmieröle der aliphatischen Ester-Art, beispielsweise Di-(2-ethylhexyl)-azelat, Pentaerythrit-tetracaproat und ähnliche; tierische und pflanzliche Öle, beispielsweise Leinsamenöl, Fett, Talg, Schweineschmalz, Erdnussöl, Dorschlebertranöl, Rizinusöl, Palmöl, Maisöl, Baumwollsamenöl und ähnliche; Kohlenwasserstoffmaterialien, wie Gasolin, Mineralöl, Brennstoff - öl, trockene Öle, Schneidflüssigkeiten, Wachse, Harze und Kautschuk; Fettsäuren, wie Seifen und ähnliche.

Bevorzugt werden die erfindungsgemäßen Stabilisatoren in allen bekannten thermoplastischen Kunststoffen, beispielsweise Acrylsäure-Butadien-Styrol-Copolymeren (ABS), ASA, SAN, Polyethylen, Polypropylen, EPM, EPDM, PVC, Acrylatkautschuk, Polyester, Polyoxymethylen (POM), Polyamid (PA), PC (Polycarbonat) und/oder thermoplastischen Polyurethanen, in dieser Schrift auch als TPU bezeichnet, zur Stabilisierung beispielsweise gegen UV-Strahlung eingesetzt. Bevorzugt werden die Stabilisatoren enthaltend in thermoplastischen Polyurethanen eingesetzt.

Bevorzugt enthalten die thermoplastischen Kunststoffe, insbesondere die TPU die phenolischen Stabilisatoren in einer Menge von 0,01 bis 5 Gew.-%, besonders bevorzugt 0,1 bis 2 Gew.-%, insbesondere 0,3 bis 1,5 Gew.-%, jeweils bezogen auf das Gewicht des thermoplastischen Kunststoffes. Zusätzlich zu den erfindungsgemäßen Stabilisatoren können weitere allgemein bekannte Stabilisatoren in den thermoplastischen Kunststoffen eingesetzt werden, beispielsweise weitere Phosphite, aber auch Thiosynergisten, HALS-Verbindungen, UV-Absorber, Quencher.

Die erfindungsgemäßen Stabilisatoren und insbesondere Mischungen enthaltend die phenolischen Ester und/oder Amide können sowohl den gegenüber Isocyanaten reaktiven Verbindungen (b) vor oder bei der Herstellung der TPU als auch dem fertigen TPU, beispielsweise dem geschmolzenen oder erweichtem TPU zugeführt werden. Das thermoplastische Polyurethan kann thermoplastisch verarbeitet werden, ohne dass die Wirkung der erfindungsgemäßen Stabilisatoren verloren geht. Verfahren zur Herstellung von TPU sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden, wobei man die Umsetzung in Gegenwart der erfindungsgemäßen Inhibitoren durchführt. Im Folgenden sollen beispielhaft die Ausgangskomponenten und Verfahren zur Herstellung der bevorzugten TPU dargestellt werden. Die bei der Herstellung der TPU üblicherweise verwendeten Komponenten (a), (b) sowie gegebenenfalls (c), (e) und/oder (f) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylendiisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexandiisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefaßt werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man Polyetherpolyole ein, besonders bevorzugt solche Polyetherole auf Basis von Polyoxytetramethylenglykol. Die Polyetherole weisen den Vorteil auf, dass sie eine höhere Hydrolysestabilität als Polyesterole besitzen.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen_von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatoren weitere Stabilisatoren, z..B. gegen Hydrolyse, Licht, Hitze oder Verfärbung, anorganische und/oder organische Füllstoffe, Verstärkungsmittel und Weichmacher.

Nähere Angaben über die oben genannten Hilfsmittel- und Zusatzstoffe sind der Fachliteratur zu entnehmen. Alle in dieser Schrift genannten Molekulargewichte weisen die Einheit [g/mol] auf. Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit.zunehmendem Gehalt an (c) ansteigt. Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor. Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert. Die Verarbeitung der erfindungsgemäßen TPU enthaltend die erfindungsgemäßen Stabilisatoren, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion. Die nach den erfindungsgemäßen Verfahren herstellbaren thermoplastischen Polyurethane, bevorzugt die Folien, Formteile, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Riemen oder Dämpfungselemente weisen die eingangs dargestellten Vorteile auf, d.h. eine geringere Farbe durch den Einsatz eines Stabilisators mit einer besonders hellen Farbe.

Die erfindungsgemäßen Vorteile sollen anhand der folgenden Beispiele dargestellt werden.

### Beispiele 1 bis 22

25 g eines Polyethylenglykols mit einer OH-Zahl von 557 mg KOH/g wurden mit 71,13g 3-(3,5-Ditert.-Butyl-4-hydroxyphenyl)-propionsäuremethylester (Beispiele 1 bis 10: Bejing Factory No. 3, Lot.-Nr. 2001-10-16; Beispiele 11 bis 14: Bejing Factory No. 3, Lot.-Nr. 2001-10-18; Beispiele 15 bis 22: Fa. Raschig) und den in der Tabelle 1 angegebenen Mengen Reduktionsmittel in einen Vierhalskolben eingewogen und auf 145°C aufgeheizt. Während der Aufheizphase und der Umesterungsreaktion wurde kontinuierlich ein Stickstoffstrom durch die Lösung geleitet. Nach Erreichen der 145°C wurden 0,177 g = 2000 ppm Kaliummethylat zu der Lösung gegeben, um die eigentliche Umesterungsreaktion zu starten. Das entstandene Methanol wurde in einer nachgeschalteten Kühlfalle (flüssiger Stickstoff) ausgefroren. Nach sechs Stunden Reaktionszeit wurde das Produkt auf 80°C abgekühlt. Anschließend wurden 0,246 g 85 %ige Phosphorsäure zur Neutralisation des Produktes in den Kolben gegeben. Das Produkt wurde noch eine halbe Stunde lang bei 80°C gerührt und anschließend über einen Druckfilter der Fa. SeitzSchenk mit einem Filter Typ T750 (Rückhalterate 4-10 µm) filtriert. Der Umsatz der Umesterungsreaktion, bestimmt über Gelpermeationschromatographie lag bei allen Beispielen oberhalb 95 %. Der Kaliumgehalt wurde mittels Atomabsorptionsspektroskopie bestimmt und lag für alle Versuche unterhalb 20 ppm Kalium.

**Tabelle 1: Vergleich der Jod - Farbzahl der Umsetzungsprodukte**

| Beispiel | Reduktionsmittel | Jod-Farbzahl |
|---|---|---|
| 1 | Ohne | 6 |
| 2 | 1 Gew.-% TNPP | 3 |
| 3 | 1 Gew.-% TLP | 4 |
| 4 | 1 Gew.-% TIOP | 3 |
| 5 | 0,5 Gew.-% Natriumhypophosphit | 4 |
| 6 | 0,5 Gew.-% Natriumdithionit | 4 |
| 7 | 1 Gew.-% DHOP | 2 |
| 8 | 1 Gew.-% Weston® 439 | Hazenzahl 125 |
| 9 | 1 Gew.-% TDP | 5 |
| 10 | Gew.-% THOP | Hazenzahl 125 |
| | | |
| 11 | Ohne | 23 |
| 12 | 0,1 Gew.-% TNPP | 12 |
| 13 | 0,5 Gew.-% TNPP | 4 |
| 14 | 1 Gew.-% TNPP | 3 |
| | | |
| 15 | Ohne | 1-2 |
| 16 | 0,1 Gew.-% TNPP | 6 |
| 17 | 0,5 Gew.-% TNPP | 4 |
| | | Hazen Zahl |
| 18 | 1 Gew.-% TNPP | 70 |
| 19 | 1 Gew.-% DHOP | 50 |
| 20 | 1 Gew.-% Weston® 439 | 90 |
| 21 | 1 Gew.-% TDP | 100 |
| 22 | 1 Gew.-% THOP | 80 |

| | | |
|---|---|---|
| TIOP = Triisooctylphosphit | | |
| TLP = Trilaurylphosphit | | |
| TNPP = Tris(-4-n-nonylphenyl)-phosphit | | |
| DHOP = Poly(dipropylenglykol)-phenyl-phosphit | | |
| TDP = Triisodecylphosphit | | |
| THOP = Tetraphenyl diisopropylenglykol-phosphit | | |
| Weston® 439 ist ein Handelsprodukt der General Electric Speality Cemicals | | |

### Beispiel 23 bis 25

2,7 mol (557,1 g) 2,6-Di-tert.butylphenol wurden zusammen mit 2 mol% (3,79 g) Käliümmethylat in einen 2 L Vierhalsrundkolben eingewogen. Dieses Gemisch wurde bei 165°C unter N₂ Spülung 30 min getrocknet. Das entstandene Methanol wurde in der Kühlfalle ausgefroren. Anschließend wurde die Apparatur mit einem Rückflusskühler ausgestattet und es wurden 2,97 mol (255,7g) Methylacrylat (=10 % molarer Überschuss) zugegeben. Bei der Zugabe wurde darauf geachtet, dass die Temperatur im Kolben nicht unter 130°C absinkt. Das Gemisch wurde bei 140°C 2 h weitergerührt.

Anschließend wurde der Rückflußkühler durch eine Destillationsbrücke ersetzt und unter kontinuierlicher Stickstoffeinleitung wurde 30 min lang das überschüssige MA herausgetrieben. Danach wurden 268,1 g eines Polyethylenglykols mit einer OH-Zahl von 565 mg KOH/g, d.h. einem mittleren Molekulargewicht von 198,58 g/mol, und die in Tabelle 2 angegebenen Reduktionsmittel zu dem Reaktionsgemisch gegeben. Das Produkt wurde bei 140°C 7 h gerührt.

Es wurde weiterhin Stickstoff eingeleitet. Nach dieser Zeit wurde der fertige phenolische Stabilisator auf 80°C abgekühlt. Es wurde eine dem Katalyator äquivalente Menge (5,3 g) 85 %ige H₃PO₄ zugeben. Nach 30 min Rühren bei 80°C wurde das ausgefallene Salz über einen beheizbaren Druckfilter der Fa. SeitzSchenk (Filter : Typ T750) bei 90°C vom Produkt abgetrennt.

**Tabelle 2: Vergleich der Jod - Farbzahl der Umsetzungsprodukte**

| Versuch | Reduktionsmittel | Jod-Farbzahl |
|---|---|---|
| 23 | Ohne | 9 |
| 24 | 1 Gew.-% TNPP | 6 |
| 25 | 3 Gew.-% TNPP | 3 |

## Patentansprüche

1. Mischung enthaltend amorphe phenolische Stabilisatoren und mindestens ein Reduktionsmittel, **dadurch gekennzeichnet, dass** die Mischung eine Farbzahl mit einer Hazenzahl < 100 gemessen nach DIN 53409 aufweist und als phenolischer Stabilisator folgende Verbindung in der Mischung vorliegt: 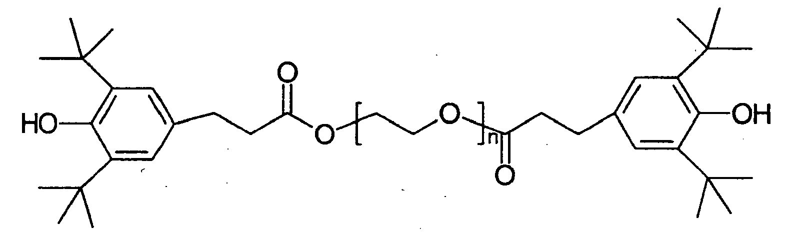 wobei n derart gewählt wird, dass in der Stabilisatormischung enthaltend die einzelnen Stabilisatormoleküle, das gewichtsmittlere Molekulargewicht der Stabilisatormischung größer ist als das zahlenmittlere Molekulargewicht der Stabilisatormischung.

2. Mischung enthaltend amorphe phenolische Stabilisatoren und mindestens ein Reduktionsmittel, **dadurch gekennzeichnet, dass** die Mischung eine Farbzahl mit einer Hazenzahl < 100 gemessen nach DIN 53409 aufweist und als phenolischer Stabilisator folgende Verbindung in der Mischung vorliegt: 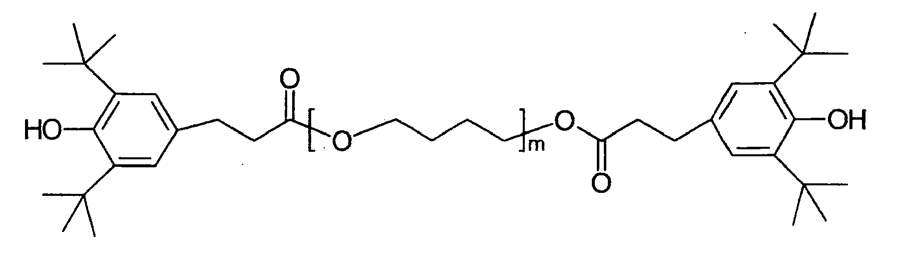 wobei n 1, 2, 3, 4, 5, 6, 7, 8, 9 oder 10 bedeutet.

3. Mischung gemäß Anspruch 1 oder 2, **dadurch gekennzeichnet, dass** die Mischung als Reduktionsmittel mindestens eine Organophosphorverbindung des trivalenten Phosphors enthält.

4. Mischung gemäß Anspruch 1 oder 2, **dadurch gekennzeichnet, dass** das Gewichtsverhältnis von phenolischem Stabilisator zu Reduktionsmittel 10000 : 1 bis 10 : 1 beträgt.

5. Kunststoffe oder Schmieröle oder pflanzliche oder tierische Öle enthaltend Mischungen gemäß einem der Ansprüche 1 bis 4.

6. Verfahren zur Herstellung von phenolischen Stabilisatoren gemäss einem der Ansprüche 1-5 durch Veresterung, Umesterung, Umamidierung und/oder Amidierung, **dadurch gekennzeichnet, dass** man die Veresterung, Umesterung, Umamidierung und/oder Amidierung in Gegenwart von mindestens einem Reduktionsmittel durchführt.

7. Verfahren gemäß Anspruch 6, **dadurch gekennzeichnet, dass** man die folgende phenolische Carbonsäure oder ein Derivat dieser Carbonsäure einsetzt: 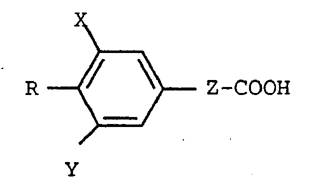 mit der folgenden Bedeutung für R, X, Y und Z:
R: -OH,
X, Y: unabhängig voneinander Wasserstoff, geradkettige, verzweigtkettige und/oder cyclische Alkylgruppe mit 1 bis 12 Kohlenstoffatomen,
Z: Alkylenrest mit 1 bis 12 Kohlenstoffatomen.

8. Verfahren gemäß Anspruch 6, **dadurch gekennzeichnet, dass** man als Alkohol mindestens einen Polyether mit einem Molekulargewicht von 120 g/mol bis 3000 g/mol einsetzt.

9. Verfahren gemäß Anspruch 6, **dadurch gekennzeichnet, dass** der Gehalt an Reduktionsmitteln in der Reaktionsmischung zur Herstellung des Esters und/oder Amide, bevorzugt des phenolischen Stabilisators, 0,01 bis 10 Gew.-%, bezogen auf die Gesamtmasse der Mischung, beträgt.

10. Mischung enthaltend phenolische Ester oder phenolische Amide erhältlich durch ein Verfahren gemäß einem der Ansprüche 6 bis 9.

## Claims

1. A mixture comprising amorphous phenolic stabilizers and at least one reducing agent, wherein the mixture has a color value with a Hazen number < 100 to DIN 53409 and comprises the following compound as phenolic stabilizer: 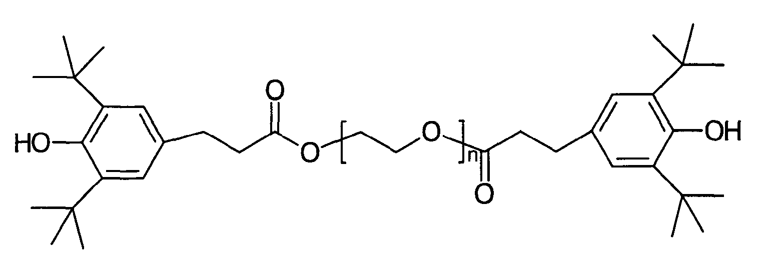 the selection of n is such that, in the stabilizer mixture comprising the individual stabilizer molecules, the weight-average molecular weight of the stabilizer mixture is greater than the number-average molecular weight of the stabilizer mixture.

2. A mixture comprising amorphous phenolic stabilizers and at least one reducing agent, wherein the mixture has a color value with a Hazen number < 100 to DIN 53409 and comprises the following compound as phenolic stabilizer: 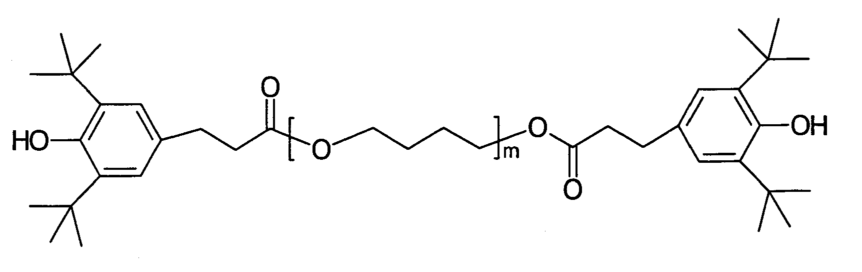 where n is 1, 2, 3, 4, 5, 6, 7, 8, 9 or 10.

3. The mixture according to claim 1 or 2, which comprises, as reducing agent, at least one organophosphorus compound of trivalent phosphorus.

4. The mixture according to claim 1 or 2, wherein the ratio of phenolic stabilizer to reducing agent by weight is from 10 000 : 1 to 10 : 1.

5. A plastic or lubricating oil or vegetable or animal oil comprising a mixture according to any of claims 1 to 4.

6. A process for preparing phenolic stabilizers according to any of claims 1 to 5 by esterification, transesterification, transamidation, and/or amidation, which comprises carrying out the esterification, transesterification, transamidation and/or amidation in the presence of at least one reducing agent.

7. The process according to claim 6, wherein use is made of the following phenolic carboxylic acid or of a derivative of this carboxylic acid: 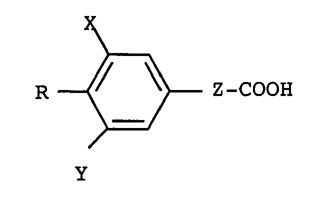 where
R is -OH,
X and Y, independently of one another, are hydrogen, or a straight-chain, branched-chain, and/or cyclic alkyl group having from 1 to 12 carbon atoms,
Z is an alkylene radical having from 1 to 12 carbon atoms.

8. The process according to claim 6, wherein the alcohol used comprises at least one polyether with a molar mass of from 120 to 3000 g/mol.

9. The process according to claim 6, wherein the content of reducing agents in the reaction mixture for preparing the ester and/or amide, preferably for preparing the phenolic stabilizer, is from 0.01 to 10% by weight, based on the total weight of the mixture.

10. A mixture comprising phenolic esters or phenolic amides obtainable by a process according to any of claims 6 to 9.

## Revendications

1. Mélange contenant des stabilisants phénoliques amorphes et au moins un réducteur, **caractérisé en ce que** le mélange présente un indice colorimétrique ayant une valeur de Hazen < 100 mesurée selon la norme DIN 53409 et **en ce que**, comme stabilisant phénolique, il y a dans le mélange un composé suivant : 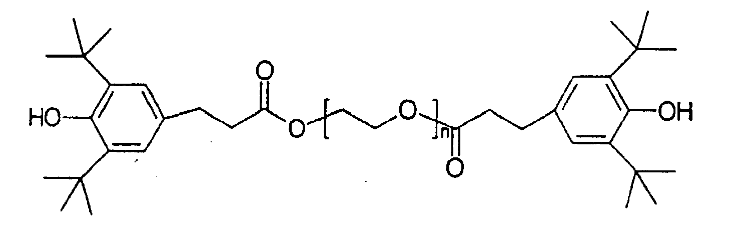 où n est choisi de telle façon que, dans le mélange de stabilisants contenant les différentes molécules de stabilisant, le poids moléculaire moyen pondéral du mélange de stabilisants soit plus grand que le poids moléculaire moyen numérique du mélange de stabilisants.

2. Mélange contenant des stabilisants phénoliques amorphes et au moins un réducteur, **caractérisé en ce que** le mélange présente un indice colorimétrique ayant une valeur de Hazen < 100 mesurée selon la norme DIN 53409 et **en ce que**, comme stabilisant phénolique, il y a dans le mélange un composé suivant : 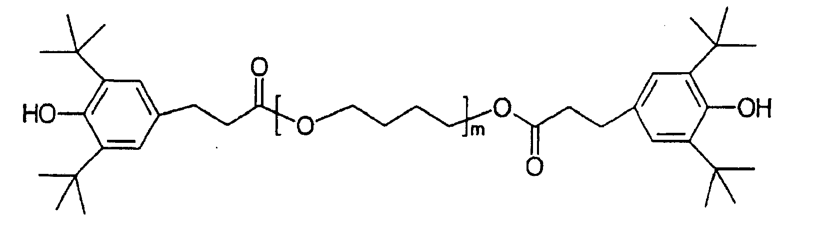 où n vaut 1, 2, 3, 4, 5, 6, 7, 8, 9 ou 10.

3. Mélange suivant la revendication 1 ou 2, **caractérisé en ce que** le mélange contient, comme réducteur, au moins un composé organique du phosphore trivalent.

4. Mélange suivant la revendication 1 ou 2, **caractérisé en ce que** le rapport pondéral entre stabilisant phénolique et réducteur est de 10 000/1 à 10/1.

5. Substances synthétiques ou huiles lubrifiantes ou huiles végétales ou animales contenant des mélanges suivant l'une des revendications 1 à 4.

6. Procédé de préparation de stabilisants phénoliques suivant l'une des revendications 1 à 5 par estérification, transestérification, transamidation et/ou amidation, **caractérisé en ce qu'**on effectue l'estérification, la transestérification, la transamidation et/ou l'amidation en présence d'au moins un réducteur.

7. Procédé suivant la revendication 6, **caractérisé en ce qu'**on met en oeuvre l'acide carboxylique phénolique suivant ou un dérivé de cet acide carboxylique : 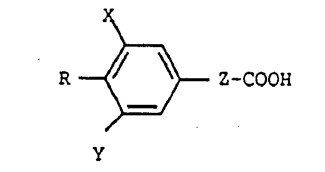 avec les significations suivantes pour R, X, Y et Z :
R: -OH,
X, Y : indépendamment l'un de l'autre, de l'hydrogène, un groupe alkyle linéaire, ramifié et/ou cyclique comportant 1 à 12 atomes de carbone,
Z : un radical alkylène comportant 1 à 12 atomes de carbone.

8. Procédé suivant la revendication 6, **caractérisé en ce que**, comme alcool, on met en oeuvre au moins un polyéther présentant un poids moléculaire de 120 g/mole à 3 000 g/mole.

9. Procédé suivant la revendication 6, **caractérisé en ce que** la teneur en réducteurs dans le mélange réactionnel pour la préparation de l'ester et/ou de l'amide, de préférence du stabilisant phénolique, est de 0,01 à 10 % en poids, par rapport à la masse globale du mélange.

10. Mélange contenant des esters phénoliques ou des amides phénoliques que l'on peut obtenir par un procédé suivant l'une des revendications 6 à 9.
